# FASCICULE DE BREVET EUROPEEN

(11) **EP 2 083 936 B1**
(45) Date de publication et mention de la délivrance du brevet: **07.12.2016**
(21) Numéro de dépôt: 07821597.7
(22) Date de dépôt: 19.10.2007
(51) Int. Cl.: B01D 53/94, B01J 21/06, B01J 23/30, C01G 41/02, C01G 45/02, C01G 49/00, C01G 49/02, B01J 37/02, B01J 37/03, B01J 21/12, B01J 23/00, B01J 23/06, B01J 23/10, B01J 23/14, B01J 23/28, B01J 23/63, B01J 35/00, C01G 39/00, C01B 13/36, C01G 41/00, C01G 45/00

(54) **COMPOSITION A ACIDITE ELEVEE A BASE D'OXYDES DE ZIRCONIUM, DE SILICIUM ET D'AU MOINS UN AUTRE ELEMENT CHOISI PARMI LE TITANE, L'ALUMINIUM, LE TUNGSTENE, LE MOLYBDENE, LE CERIUM, LE FER, L'ETAIN, LE ZINC ET LE MANGANESE**
STARK SAURE ZUSAMMENSETZUNG, ENTHALTEND ZIRCONIUM- UND SILICIUMOXIDE UND EIN OXID MINDESTENS EINES UNTER TITAN, ALUMINIUM, WOLFRAM, MOLYBDÄN, CER, EISEN, ZINN, ZINK UND MANGAN AUSGEWÄHLTEN ELEMENTS
HIGHLY ACIDIC COMPOSITION CONTAINING ZIRCONIUM AND SILICON OXIDES AND AN OXIDE OF AT LEAST ONE ELEMENT SELECTED FROM TITANIUM, ALUMINIUM, TUNGSTEN, MOLYBDENUM, CERIUM, IRON, TIN, ZINC, AND MANGANESE

(30) Priorité: 20.10.2006 FR 0609224
(43) Date de publication de la demande: 05.08.2009
(73) Titulaire: Magnesium Elektron Limited, Salford M50 3XE (GB)
(72) Inventeur: LARCHER, Olivier, Pennington, NJ 08534 (US); ROHART, Emmanuel, 17220 Sainte Soulle (FR); VERDIER, Stephan, 69008 Lyon (FR); BRADSHAW, Heather, Manchester Greater Manchester M27 8LS (GB); BUTLER, Clive, Manchester Greater Manchester M27 8LS (GB); HARRIS, Deborah, Manchester Greater Manchester M27 8LS (GB); FEELEY, Mairead, Manchester Greater Manchester M27 8LS (GB); CRINIERE, Guillaume, 1050 Ixelles (BE)
(74) Mandataire: Andrews, Paul David
(86) Numéro de dépôt international: PCT/EP2007/061233
(87) Numéro de publication internationale: WO 2008/046920

(56) Documents cités:
- WO-A-2006/095992
- US-A- 4 791 089
- US-A- 5 648 589
- US-A1- 2005 032 637
- BENITEZ ET AL: "Silica supported superacid isomerization catalysts" CATALYSIS TODAY, ELSEVIER, vol. 107-108, 30 octobre 2005 (2005-10-30), pages 651-656, XP005122550 ISSN: 0920-5861
- VU T N ET AL: "Platinum-tungstated zirconia isomerization catalysts" JOURNAL OF CATALYSIS, ACADEMIC PRESS, DULUTH, MN, US, vol. 231, no. 2, 25 avril 2005 (2005-04-25), pages 468-479, XP004842304 ISSN: 0021-9517

## Description

La présente invention concerne une composition à acidité élevée à base d'oxyde de zirconium, d'oxyde de silicium et d'au moins un oxyde d'un autre élément M choisi parmi le titane, l'aluminium, le tungstène, le molybdène, le cérium, le fer, l'étain, le zinc et le manganèse, des procédés de préparation de cette composition et son utilisation dans le traitement des gaz d'échappement de moteurs diesel.

Il est connu d'utiliser pour le traitement des gaz d'échappement des moteurs diesel des catalyseurs d'oxydation qui ont pour effet de catalyser l'oxydation du monoxyde de carbone (CO) et des hydrocarbures (HC) contenus dans ces gaz. Or, les nouveaux moteurs diesel produisent des gaz qui sont plus chargés en CO et HC que les moteurs plus anciens. Par ailleurs, du fait du durcissement des normes antipollution, les lignes d'échappement des moteurs diesel devront à l'avenir être équipées de filtres à particules. Or, les catalyseurs sont aussi utilisés pour élever la température des gaz d'échappement à une valeur suffisamment haute pour déclencher la régénération de ces filtres. On comprend donc qu'il y a un besoin pour des catalyseurs dont l'efficacité soit améliorée puisqu'ils doivent traiter des gaz plus chargés en polluants et dont la résistance à la température soit aussi augmentée puisque ces catalyseurs risquent d'être soumis à des températures plus élevées lors de la régénération des filtres.

On sait aussi que dans le cas du traitement des gaz de moteurs diesel par réduction des oxydes d'azote (NOx) par l'ammoniaque ou l'urée, on a besoin d'avoir des catalyseurs présentant une certaine acidité et, là aussi, une certaine résistance à la température.

On sait enfin qu'il y a aussi un besoin de catalyseurs dont les performances sont peu sensibles à la sulfatation.

WO 2006/095992 décrit des matériaux céramiques à base notamment de zircone, d'oxyde de titane et d'un oxyde d'un autre élément comme le tungstène ou l'aluminium. Ces matériaux sont obtenus par réaction solide/solide à partir des oxydes des différents éléments et ils peuvent être utilisés pour la fabrication de substrats de type filtre ou nid d'abeille. Ces matériaux sont denses, sans surface spécifique substantielle et donc sans acidité.

L'objet de l'invention est de fournir des matériaux susceptibles d'être utilisés dans la fabrication de catalyseurs répondant aux besoins mentionnés ci-dessus.

Dans ce but, la composition selon l'invention est à base d'oxyde de zirconium, d'oxyde de silicium et d'au moins un oxyde d'un autre élément M choisi parmi le titane, l'aluminium, le tungstène, le molybdène, le cérium, le fer, l'étain, le zinc et le manganèse et dans les proportions suivantes en masse en ces différents éléments :
- oxyde de silicium : 5%-30%
- oxyde de l'élément M : 1%-20%
le complément à 100% en oxyde de zirconium,
et elle est caractérisée en ce qu'elle présente en outre une acidité mesurée par le test au méthylbutynol d'au moins 90%.

De par son acidité, la composition de l'invention confère une bonne activité catalytique aux catalyseurs dans la fabrication desquels elle est utilisée.

Par ailleurs, la composition de l'invention a l'avantage de présenter une surface spécifique qui varie relativement peu après vieillissement, c'est-à-dire après avoir été soumise à des températures élevées.

Enfin et comme autre avantage, la composition de l'invention présente une résistance améliorée à la sulfatation.

D'autres caractéristiques, détails et avantages de l'invention apparaîtront encore plus complètement à la lecture de la description qui va suivre, ainsi que des divers exemples concrets mais non limitatifs destinés à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Par terre rare on entend les éléments du groupe constitué par l'yttrium et les éléments de la classification périodique de numéro atomique compris inclusivement entre 57 et 71.

La classification périodique des éléments à laquelle il est fait référence est celle publiée dans le Supplément au Bulletin de la Société Chimique de France n° 1 (janvier 1966).

En outre, les calcinations à l'issue desquelles sont données les valeurs de surface sont des calcinations sous air.

Les valeurs de surface spécifiques qui sont indiquées pour une température et une durée données correspondent, sauf indication contraire, à des calcinations sous air à un palier de température sur la durée indiquée.

Les teneurs sont données en masse et en oxyde sauf indication contraire.

On précise aussi pour la suite de la description que, sauf indication contraire, dans les fourchettes de valeurs qui sont données, les valeurs aux bornes sont incluses.

Les compositions selon l'invention se caractérisent d'abord par la nature de leurs constituants.

Ces compositions sont à base d'oxyde de zirconium, la teneur en oxyde de zirconium pouvant être comprise plus particulièrement entre 70% et 90%, et encore plus particulièrement entre 75% et 85%. Elles comprennent en outre de la silice dans une proportion comprise entre 5% et 30%, plus particulièrement entre 5% et 15% et encore plus particulièrement entre 10% et 15%. Elles comprennent par ailleurs au moins un oxyde d'un troisième élément choisi parmi le titane, l'aluminium, le tungstène, le molybdène, le cérium, le fer, l'étain, le zinc et le manganèse dans une proportion comprise entre 1% et 20%, plus particulièrement entre 5 et 15%.

Les compositions de l'invention peuvent se présenter sous la forme de plusieurs variantes en ce qui concerne leur composition.

Selon une variante particulière ces compositions consistent essentiellement en oxyde de zirconium, en oxyde de silicium et en oxyde de tungstène. Dans ce cas, elles ne contiennent pas d'oxyde d'autre élément M ni d'un autre métal de type métal précieux notamment.

Selon une autre variante, les compositions de l'invention sont à base, ou sont constituées essentiellement, d'oxyde de zirconium, d'oxyde de silicium et des oxydes de cérium et de manganèse.

Selon encore une autre variante, les compositions de l'invention peuvent comprendre en outre au moins un oxyde d'un quatrième élément M' choisi parmi les terres rares autres que le cérium. Cette terre rare peut être tout particulièrement l'yttrium ou le lanthane. La teneur en cette terre rare est généralement comprise entre 1 et 15%, plus particulièrement entre 1 et 10% en masse.

Comme exemple de compositions de ce type on peut mentionner plus particulièrement les compositions à base d'oxyde de zirconium, d'oxyde de silicium et d'oxydes d'yttrium et de tungstène ainsi que les compositions à base d'oxyde de zirconium, d'oxyde de silicium et des oxydes de cérium, de tungstène et d'yttrium, les compositions à base d'oxyde de zirconium, d'oxyde de silicium et des oxydes de fer et d'yttrium, les compositions à base d'oxyde de zirconium, d'oxyde de silicium et des oxydes de tungstène, de manganèse et d'yttrium ou encore les compositions à base d'oxyde de zirconium, d'oxyde de silicium et des oxydes de tungstène, de manganèse, d'yttrium et de cérium.

Une caractéristique importante des compositions de l'invention est leur acidité. Cette acidité est mesurée par le test au méthylbutynol, qui sera décrit plus loin, et elle est d'au moins 90% et, plus particulièrement, elle peut être d'au moins 95%.

Cette acidité peut aussi être évaluée par l'activité acide qui est aussi mesurée à partir du test au méthylbutynol et qui caractérise une acidité du produit indépendamment de sa surface.

Cette activité acide est d'au moins 0,03 mmol/h/m², plus particulièrement d'au moins 0,05 mmol/h/m². Elle peut être plus particulièrement encore d'au moins 0,075 mmol/h/m² et notamment d'au moins 0,09 mmol/h/m².

Les compositions de l'invention présentent une surface spécifique importante. Cette surface peut être en effet d'au moins 65 m²/g après calcination à 900°C 4 heures dans le cas des compositions pour lesquelles l'élément M est le tungstène. Dans les autres cas, c'est-à-dire lorsque l'élément M est différent du tungstène, cette surface est d'au moins 95 m²/g après calcination toujours à 900°C 4 heures. Cette surface, mesurée dans les mêmes conditions peut être plus particulièrement d'au moins 100 m²/g et encore plus particulièrement d'au moins 110 m²/g, notamment lorsque l'élément M est le titane ou l'aluminium. Dans le cas particulier de l'aluminium, cette surface peut être encore plus particulièrement d'au moins 130 m²/g.

Par ailleurs, les compositions de l'invention peuvent présenter une surface encore importante à température plus élevée. Ainsi, après calcination à 1000°C 4 heures elles peuvent posséder une surface spécifique d'au moins 10 m²/g, cette surface pouvant être plus particulièrement d'au moins 15 m²/g et encore plus particulièrement d'au moins 20 m²/g, notamment dans le cas où l'élément M est l'aluminium ou le cérium.

Selon une variante intéressante, les compositions de l'invention peuvent se présenter sous la forme d'une solution solide même après calcination à 900°C 4 heures ou encore à 1000°C 4 heures. On entend par là que les éléments silicium et M sont en solution solide dans l'oxyde de zirconium. On peut mettre en évidence cette caractéristique par une analyse aux rayons X de la composition. Les diagrammes RX dans ce cas ne font pas apparaitre de pics correspondant à de la silice ou à un oxyde de l'élément M. Ces diagrammes ne montrent que la présence de l'oxyde de zirconium, généralement sous une phase unique tétragonale. Toutefois, la présence de deux phases de l'oxyde de zirconium, l'une majoritaire tétragonale et l'autre, minoritaire monoclinique est parfois possible.

Les compositions de l'invention peuvent présenter en outre une teneur en sulfate qui peut être très faible. Cette teneur peut être d'au plus 800 ppm, plus particulièrement d'au plus 500 ppm, encore plus particulièrement d'au plus 100 ppm, cette teneur étant exprimée en masse de SO₄ par rapport à l'ensemble de la composition. Cette teneur est mesurée par un appareil de type LECO ou ELTRA c'est-à-dire par une technique mettant en oeuvre une oxydation catalytique du produit en four à induction et une analyse IR du SO₂ formé.

Par ailleurs, les compositions de l'invention peuvent présenter aussi une teneur en chlore qui peut être très faible. Cette teneur peut être d'au plus 500 ppm, notamment d'au plus 200 ppm, plus précisément d'au plus 100 ppm, plus particulièrement d'au plus 50 ppm et encore plus particulièrement d'au plus 10 ppm. Cette teneur étant exprimée en masse de CI par rapport à l'ensemble de la composition.

Enfin, les compositions de l'invention peuvent présenter aussi une teneur en élément alcalin, notamment en sodium, d'au plus 500 ppm, notamment d'au plus 200 ppm, plus particulièrement d'au plus 100 ppm, encore plus particulièrement d'au plus 50 ppm. Cette teneur étant exprimée en masse d'élément, par exemple masse de Na, par rapport à l'ensemble de la composition.

Ces teneurs en chlore et alcalin sont mesurées par la technique de chromatographie ionique.

Les procédés de préparation des compositions de l'invention vont maintenant être décrits. Il existe en effet deux modes de réalisation possibles pour cette préparation, chaque mode pouvant comporter des variantes.

Les deux modes se distinguent notamment par la nature du composé du zirconium de départ et les variantes par l'étape d'introduction des composés de l'élément M.

Le procédé selon le premier mode est caractérisé en ce qu'il comprend les étapes suivantes :
- (a₁) on met en présence dans un milieu liquide un composé du zirconium, un composé du silicium, un composé de l'élément M et un composé basique ce par quoi on obtient un précipité;
- (b₁) on effectue un mûrissement en milieu liquide du précipité ainsi obtenu;
- (c₁) on sépare le précipité du milieu issu de l'étape précédente et on le calcine.

Le procédé selon ce premier mode comporte une variante dans laquelle la première étape consiste à mettre en présence dans le milieu liquide un composé du zirconium, un composé basique et un composé du silicium mais sans le composé de l'élément M. Cette variante met ensuite en oeuvre une étape (b₁) identiques à l'étape (b₁) de la variante précédente. Ensuite, dans une étape (c₁^{'}) on ajoute un composé de l'élément M au milieu issu de l'étape précédente. On peut noter qu'il est possible d'effectuer cette étape (c₁') en séparant tout d'abord le précipité du milieu obtenu à la suite du mûrissement de l'étape (b₁^{'}), en lavant le précipité séparé puis en le remettant en suspension dans l'eau et en ajoutant à la suspension obtenue l'élément M. On notera que dans le cas particulier du tungstène, il peut être préférable d'ajuster le pH du milieu avant introduction du composé de l'élément M à une valeur comprise entre 3 et 9.

Dans une étape suivante, (d₁^{'}), on sèche la suspension, ce séchage se faisant plus particulièrement par atomisation.

On entend classiquement ici et pour le reste de la description par séchage par atomisation un séchage par pulvérisation de la suspension dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

Enfin, dans une dernière étape, (e₁'), on calcine le précipité obtenu après l'atomisation.

Les différentes étapes ci-dessus vont être décrites plus en détail.

La première étape du procédé selon ce premier mode consiste à mettre en présence dans le milieu liquide un composé du zirconium, un composé du silicium et, dans le cas de la première variante, un composé de l'élément M. Les différents composés sont présents dans les proportions stoechiométriques nécessaires pour obtenir la composition finale désirée.

Le milieu liquide est généralement l'eau.

Les composés sont de préférence des composés solubles. Le composé du zirconium peut être de préférence un nitrate qui peut avoir été obtenu par exemple par attaque à l'acide nitrique d'un hydroxyde de zirconium.

Comme composé du silicium on peut mentionner plus particulièrement les silicates alcalins et notamment le silicate de sodium. Le silicium peut aussi être apporté par un composé du type sol de silice comme par exemple le Morrisol ou le Ludox commercialisés respectivement par les sociétés Morrisons Gas Related Products Limited et Grace Davison ou encore par un composé organométallique comme l'ortho-tétraéthylsilicate de sodium (TEOS), le méthylsiliconate de potassium ou analogue.

Le composé de l'élément M peut être choisi par exemple parmi l'ammonium oxalate de titane (NH₄)₂TiO(ox)₂, l'oxychlorure de titane TiOCl₂, le nitrate d'aluminium Al(NO₃)₃, le chlorohydrate d'aluminium Al₂(OH)₅Cl, la boehmite AIO(OH), le métatungstate d'ammonium (NH₄)₆W₁₂O₄₁ et le métatungstate de sodium Na₂WO₄, l'heptamolybdate d'ammonium (NH₄)₆MO₇O₂₄, 4H₂O.

Dans le cas du cérium et des autres terres rares, du fer, de l'étain, du zinc et du manganèse, on peut utiliser des sels inorganiques ou organiques de ces éléments. On peut mentionner les chlorures ou les acétates et, plus particulièrement les nitrates. On peut citer encore plus particulièrement le chlorure d'étain II ou IV, le nitrate de zinc.

Comme composé basique on peut utiliser les produits du type hydroxyde ou carbonate. On peut citer les hydroxydes d'alcalins ou d'alcalino-terreux et l'ammoniaque. On peut aussi utiliser les amines secondaires, tertiaires ou quaternaires. On peut aussi mentionner l'urée.

La mise en présence des différents composés peut se faire de différentes manières. On peut introduire le composé de l'élément M avec le composé du zirconium dans un réacteur contenant en pieds de cuve le composé basique puis, on peut ajouter dans un second temps le composé du silicium.

Il est aussi possible d'introduire simultanément le composé de l'élément M, le composé du zirconium et le composé du silicium dans un réacteur contenant en pieds de cuve le composé basique.

Cette première étape est généralement conduite à la température ambiante (15 - 35°C).

La seconde étape (b₁) ou (b₁^{'}) du procédé selon le premier mode de réalisation est l'étape de mûrissement. Celui-ci peut être réalisé directement sur le milieu réactionnel obtenu après l'étape (a₁) ou (a₁') ou, éventuellement, sur une suspension obtenue après séparation du précipité du milieu issu de l'étape (a₁) ou (a₁') et remise dans l'eau du précipité. Le mûrissement se fait en chauffant le milieu. La température à laquelle est chauffé le milieu est d'au moins 60°C et encore plus particulièrement d'au moins 90°C. Le milieu est maintenu ainsi à une température constante pendant une durée qui est habituellement d'au moins 30 minutes et plus particulièrement d'au moins 1 heure. Le mûrissement peut se faire à la pression atmosphérique ou éventuellement à une pression plus élevée.

A l'issue de l'étape de mûrissement, on récupère une masse d'un précipité solide qui peut être séparé de son milieu par toute technique classique de séparation solide-liquide telle que par exemple filtration, décantation, essorage ou centrifugation.

De préférence, le produit tel que récupéré est soumis à un ou plusieurs lavages, à l'eau ou avec des solutions aqueuse acides ou basiques.

Dans le cas de la seconde variante le précipité obtenu, de préférence après un lavage dans les conditions qui viennent d'être décrites, est remis en suspension dans l'eau et on ajoute le composé de l'élément M à la suspension ainsi obtenu. Là aussi et dans le cas particulier du tungstène, il peut être préférable d'ajuster le pH du milieu avant introduction du composé de l'élément M à une valeur comprise entre 3 et 9.

Ce qui a été décrit plus haut comme exemples d'un tel composé s'applique aussi ici.

Dans une étape suivante de cette variante, on sèche cette suspension. Le séchage peut se faire par tout moyen connu, par exemple à une température comprise entre 50°C et 200°C. Il peut se faire plus particulièrement par atomisation ou par lyophilisation.

La dernière étape du procédé est une calcination. Cette calcination permet de développer la cristallinité du produit formé et elle peut être également ajustée en fonction de la température d'utilisation ultérieure réservée à la composition, et ceci en tenant compte du fait que la surface spécifique du produit est d'autant plus faible que la température de calcination mise en oeuvre est plus élevée. Une telle calcination est généralement opérée sous air.

En pratique, on limite généralement la température de calcination à un intervalle de valeurs comprises entre 500°C et 1000°C, plus particulièrement entre 700°C et 900°C.

La durée de cette calcination peut varier dans de larges limites, elle est en principe d'autant plus grande que la température est basse. A titre d'exemple uniquement, cette durée peut varier entre 2 heures et 10 heures.

Dans le cas de la préparation d'une composition comprenant deux éléments M, il est possible d'utiliser un procédé selon la variante décrite plus haut dans laquelle toutefois un composé du premier élément M est introduit dans la première étape avec le composé du zirconium et celui du silicium, le composé du second élément M étant ensuite introduit lors de l'étape (c₁'). Pour les compositions comprenant un élément M', on peut procéder de la même manière en introduisant le composé de l'élément M' soit dans la première étape soit dans l'étape (c₁').

Un second mode de réalisation du procédé de préparation va maintenant être décrit.

Le procédé selon ce second mode est caractérisé en ce qu'il comprend les étapes suivantes :
- (a₂) on met en présence dans un milieu liquide un oxychlorure de zirconium, un composé de l'élément M et un composé basique de manière à amener le pH du milieu formé à une valeur d'au moins 12, ce par quoi on obtient un précipité;
- (b₂) on effectue éventuellement un mûrissement du milieu obtenu à l'étape précédente;
- (c₂) on ajoute au milieu obtenu à l'étape (a₂) ou (b₂) si celle-ci est mise en oeuvre, un composé du silicium et un acide de manière à amener le pH du milieu formé à une valeur comprise entre 4 et 8;
- (d₂) on sépare le précipité du milieu issu de l'étape (c₂) et on le calcine.

Le procédé selon ce second mode comporte aussi une variante dans laquelle la première étape consiste à mettre en présence en milieu liquide un oxychlorure de zirconium et un composé basique mais sans le composé de l'élément M. Cette variante met ensuite en oeuvre des étapes (b₂'), celle-ci étant aussi optionnelle, et (c₂') identiques respectivement aux étapes (b₂) et (c₂) de la variante précédente. Ensuite, dans une étape (d₂') on sépare le précipité du milieu issu de l'étape (c₂'), on le remet en suspension dans l'eau et on ajoute à la suspension obtenue un composé de l'élément M. Puis, dans une étape (e₂') on sèche la suspension, plus particulièrement par atomisation ou liophylisation et, dans une dernière étape, on calcine le produit obtenu.

Ce qui a été décrit plus haut pour le premier mode de réalisation pour la première étape, notamment quant à la nature des différents composés, leur mise en présence et leur ordre d'introduction et la précipitation, s'applique aussi ici. Toutefois, le second mode de réalisation se distingue du premier par la nature du composé de zirconium puisqu'ici il s'agit d'un oxychlorure qui peut avoir été obtenu par exemple par attaque à l'acide chlorhydrique d'un hydroxyde de zirconium. En outre, dans le cas du second mode de réalisation, la précipitation s'effectue à un pH qui doit être d'au moins 12. De ce fait, il est préférable d'utiliser un composé basique de basicité suffisamment forte pour vérifier cette condition. On utilise ainsi de préférence un hydroxyde alcalin comme l'hydroxyde de sodium ou de potassium.

Il est possible à ce stade du procédé d'utiliser des additifs de nature à faciliter la mise en oeuvre de celui-ci, tels que des sulfates, des phosphates ou des polycarboxylates.

A l'issue de cette première étape, on peut effectuer un mûrissement du même type que celui décrit plus haut pour le premier mode ainsi que, de préférence, un lavage. Ce qui a été décrit dans le cas de ce premier mode pour les conditions de mûrissement et de lavage s'applique aussi ici.

Le procédé selon le second mode de réalisation comporte une troisième étape (c₂) ou (c₂') selon la variante concernée dans laquelle on ajoute le composé du silicium et un acide au milieu issu de l'étape précédente (a₂) ou (b₂) ou (a₂') ou (b₂'). Généralement, cette troisième étape est réalisée après un lavage intermédiaire, c'est à dire après remise en suspension dans l'eau du précipité préalablement lavé.

L'addition du composé du silicium et de l'acide se fait dans des conditions telles que le pH du milieu ainsi obtenu soit compris entre 4 et 8.

On utilise comme acide l'acide nitrique par exemple.

Il est possible à l'issue des étapes (c₂) ou (c₂') et avant la séparation du précipité du milieu liquide d'effectuer un mûrissement. Ce mûrissement est conduit dans les mêmes conditions que celles décrites précédemment.

La dernière étape (d₂) du procédé dans le cas de la première variante consiste à séparer le précipité du milieu obtenu à l'issue de l'étape précédente et à le calciner, éventuellement après un lavage. Cette séparation, l'éventuel lavage et la calcination s'effectuent dans les mêmes conditions que celles qui ont été décrites plus haut dans les étapes analogues du premier mode de réalisation.

Dans le cas de la variante où le composé de l'élément M n'a pas été introduit lors de la première étape, on procède comme cela a été indiqué plus haut par séparation du précipité, remise en suspension, addition du composé de l'élément M et séchage, plus particulièrement par atomisation ou liophylisation. On notera que dans le cas particulier du tungstène, il peut être préférable d'ajuster le pH du milieu avant introduction du composé de l'élément M à une valeur comprise entre 3 et 6, de préférence entre 3 et 4.

Le procédé selon le second mode de réalisation de l'invention peut être mis en oeuvre selon encore une autre variante. Selon cette variante, le procédé comporte les étapes suivantes :
- (a₂'') on met en présence dans un milieu liquide un oxychlorure de zirconium, et un composé basique de manière à amener le pH du milieu formé à une valeur d'au moins 12, ce par quoi on obtient un précipité;
- (b₂'') on effectue éventuellement un mûrissement du milieu obtenu à l'étape précédente;
- (c₂'') on ajoute au milieu obtenu à l'étape (a₂'') ou (b₂'') un composé du silicium et un composé de l'élément M et un acide de manière à amener le pH du milieu formé à une valeur comprise entre 4 et 8;
- (d₂'') on sépare le solide du milieu issu de l'étape (c₂'') et on le calcine.

Comme on le voit cette variante comprend deux premières étapes (a₂'') et (b₂'') qui sont identiques aux étapes correspondantes de la variante décrit précédemment dans laquelle le composé de l'élément M n'est pas présent dans la première étape. Bien évidemment, tout ce qui a été décrit plus haut pour ces étapes s'applique de même ici pour la description de cette variante. La différence avec la variante précédente réside dans le fait que le composé du silicium et celui de l'élément M sont mis en présence ensemble dans l'étape (c₂''). Les conditions dans laquelle se déroule cette étape et l'étape suivante sont par ailleurs identiques à ce qui a été décrit pour les étapes du même type des autres variantes. De même il est possible de prévoir un mûrissement à l'issue de l'étape (c₂'').

Dans le cas plus particulier des compositions comprenant au moins deux éléments M, le procédé selon le second mode de réalisation de l'invention peut être mis en oeuvre selon une variante particulière. Selon cette dernière variante, le procédé comporte les étapes suivantes :
- (a₃) on met en présence dans un milieu liquide un oxychlorure de zirconium, un composé d'un premier élément M et un composé basique de manière à amener le pH du milieu formé à une valeur d'au moins 12, ce par quoi on obtient un précipité;
- (b₃) on effectue éventuellement un mûrissement du milieu obtenu à l'étape précédente;
- (c₃) on ajoute au milieu obtenu à l'étape (a₃) ou (b₃) un composé du silicium et un composé d'un second élément M et un acide de manière à amener le pH du milieu formé à une valeur comprise entre 4 et 8;
- (d₃) on sépare le solide du milieu issu de l'étape (c₃) et on le calcine.

Toujours dans le cas plus particulier des compositions comprenant au moins deux éléments M, le procédé selon le second mode de réalisation de l'invention peut être mis en oeuvre selon encore une autre variante particulière. Selon cette variante, le procédé comprend alors les étapes suivantes :
- (a₄) on met en présence dans un milieu liquide un oxychlorure de zirconium, et un composé basique de manière à amener le pH du milieu formé à une valeur d'au moins 12, ce par quoi on obtient un précipité;
- (b₄) on effectue éventuellement un mûrissement du milieu obtenu à l'étape précédente;
- (c₄) on ajoute au milieu obtenu à l'étape (a₄) ou (b₄) un composé du silicium, un composé d'au moins un des éléments M et un acide de manière à amener le pH du milieu formé à une valeur comprise entre 4 et 8;
- (d₄) on sépare le précipité du milieu issu de l'étape (c₄), on le remet en suspension dans l'eau et on ajoute à la suspension obtenue un composé d'au moins un autre élément M;
- (e₄) on sèche, plus particulièrement par atomisation ou liophylisation, la suspension;
- (f₄) on calcine le produit issu de l'étape (e₄).

Enfin, dans le cas encore plus particulier des compositions comprenant au moins un élément M' celui-ci peut être introduit sous forme d'un composé de cet élément de la même manière que le composé de l'élément M à l'une des étapes précitées (a₁'), (a₂), (c₂), (a₂'), (c₂'), (d₂'), (a₂"), (c₂"), (a₃), (c₃), (a₄) ou (c₄).

Comme on le voit ces variantes se caractérisent essentiellement par l'ordre d'introduction des éléments constitutifs des compositions, notamment des éléments M ou M' mais les conditions de mise en oeuvre de chacune des étapes sont identiques à ce qui a été décrit pour les étapes correspondantes ou analogues des variantes précédentes. On précisera simplement ici qu'à l'issue de l'étape (c₃) ou (c₄) et avant la séparation du précipité, il est aussi possible d'effectuer un mûrissement du précipité ou du solide en milieu liquide.

On peut mentionner enfin une autre variante qui s'applique aux deux modes de réalisation du procédé et pour le cas où l'élément M est introduit lors de la première étape ou encore à l'issue des étapes (c₂^{"}), (c₃) ou (c₄). Dans cette dernière variante, on sèche le précipité, de préférence par atomisation, avant la dernière étape de calcination.

Enfin, l'utilisation d'un silicate alcalin est préférée lorsque l'on cherche à obtenir des compositions sous forme d'une solution solide.

Les compositions de l'invention telles que décrites plus haut ou telles qu'obtenues par les procédés mentionnés précédemment se présentent sous forme de poudres mais elles peuvent éventuellement être mises en forme pour se présenter sous forme de granulés, billes, cylindres, monolithes ou filtres sous forme de nids d'abeille de dimensions variables. Ces compositions peuvent être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques. L'invention concerne donc aussi des systèmes catalytiques contenant des compositions de l'invention. Ces systèmes catalytiques peuvent comprendre un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Dans le cas de ces utilisations dans des systèmes catalytiques, les compositions de l'invention peuvent être employées en combinaison avec des métaux de transition; elles jouent ainsi le rôle de support pour ces métaux. Par métaux de transition, on entend les éléments des groupes IIIA à IIB de la classification périodique. Comme métaux de transition, on peut citer plus particulièrement le vanadium et le cuivre ainsi que les métaux précieux, comme le platine, le rhodium, le palladium, l'argent ou l'iridium. La nature de ces métaux et les techniques d'incorporation de ceux-ci dans les compositions supports sont bien connues de l'homme du métier. Par exemple, les métaux peuvent être incorporés aux compositions par imprégnation.

Les systèmes de l'invention peuvent être utilisés dans le traitement de gaz. Ils peuvent agir dans ce cas comme catalyseur d'oxydation du CO et des hydrocarbures contenus dans ces gaz ou encore comme catalyseur de réduction des oxydes d'azote (NOx) dans la réaction de réduction de ces NOx par l'ammoniaque ou l'urée et, dans ce cas, en tant que catalyseur pour la réaction d'hydrolyse ou de décomposition de l'urée en ammoniaque (Procédé SCR). Dans le cas de cette utilisation en catalyse SCR, les compositions à base d'oxyde de zirconium, d'oxyde de silicium et d'oxydes d'yttrium et de tungstène ainsi que les compositions à base d'oxyde de zirconium, d'oxyde de silicium et des oxydes de cérium, de tungstène et d'yttrium sont particulièrement intéressantes.

Les gaz susceptibles d'être traités dans le cadre de la présente invention sont, par exemple, ceux émis par des installations fixes comme les turbines à gaz, les chaudières de centrales thermiques. Ce peut être aussi les gaz issus des moteurs à combustion interne et tout particulièrement les gaz d'échappement des moteurs diesel

Dans le cas de l'utilisation en catalyse de la réaction de réduction des NOx par l'ammoniaque ou l'urée, les compositions de l'invention peuvent être employées en combinaison avec des métaux du type métaux de transition comme le vanadium ou le cuivre.

Des exemples vont maintenant être donnés.

On décrit tout d'abord ci-dessous le test au méthylbutynol utilisé pour caractériser l'acidité des compositions selon l'invention.

Ce test catalytique est décrit par Pernot et al. dans Applied Catalysis, 1991, vol 78, p 213 et utilise le 2-méthyl-3-butyn-2-ol (méthylbutynol ou MBOH) comme molécule sonde de l'acido-basicité de surface des compositions préparées. En fonction de l'acido-basicité des sites de surface de la composition, le méthylbutynol peut être transformé suivant 3 réactions :

**Tableau 1**

| Réaction | Produits de réaction |
|---|---|
| Acide | 2-méthyl-1-butèn-3-yne + 3-méthyl-2-butènal |
| Amphotère | 3-hydroxy-3-méthyl-2-butanone + 3-méthyl-3-butèn-2-one |
| Basique | Acétone + Acétylène |

Expérimentalement, une quantité (m) d'environ 400 mg de composition est placée dans un réacteur en quartz. La composition subit d'abord un prétraitement à 400°C pendant 2h sous un flux gazeux de N₂ à un débit de 4 L/h.

La température de la composition est ensuite ramenée à 180°C. On met alors en contact de manière périodique la composition avec des quantités données de MBOH. Cette mise en contact périodique consiste à faire circuler au cours d'une injection de 4 minutes un mélange synthétique de 4 %vol de MBOH dans N₂ avec un débit de 4 L/h ce qui correspond à un débit molaire horaire de méthylbutynol (Q) de 7,1 mmol/h. On procède à 10 injections. A la fin de chaque injection, le flux gazeux en sortie de réacteur est analysé par chromatographie en phase gazeuse pour déterminer la nature des produits de la réaction (cf Tableau 1) et leur quantité.

La sélectivité (Si) pour un produit i de la réaction de transformation du méthylbutynol est définie par la proportion de ce produit par rapport à l'ensemble des produits formés (Sᵢ=Cᵢ/∑ où Ci est la quantité de produit i et ∑ représente la somme des produits formés lors de la réaction). On définit alors une sélectivité acide, amphotère ou basique qui est égale à la somme des sélectivités des produits formés pour les réactions respectivement acide, amphotère et basique. Par exemple, la sélectivité acide (S[acide]) est égale à la somme des sélectivités en 2-méthyl-1-butèn-3-yne et en 3-méthyl-2-butènal. Ainsi, plus la sélectivité acide est élevée, plus les produits de réaction acide sont formés en quantités importantes et plus le nombre de sites acides sur la composition étudiée est élevé.

Le taux de transformation du méthybutynol (TT) au cours du test est calculé en faisant la moyenne des taux de transformation du méthylbutynol sur les 5 dernières injections du test.

On peut également définir l'activité acide (A[acide]) de la composition exprimée en mmol/h/m² à partir du taux de transformation du méthylbutynol (TT exprimé en %), du débit molaire horaire du méthylbutynol (Q exprimé en mmol/h), de la sélectivité acide (S[acide] exprimée en %), de la quantité de composition analysée (m exprimée en g) et de la surface spécifique de la composition (SBET exprimée en m²/g) selon la relation suivante :
A[acide]=10⁻⁴.TT.Q.S[acide]/(SBET.m)

Les valeurs d'acidité (sélectivité acide) obtenues par le test qui vient d'être décrit sont données dans le tableau 2 pour chacune des compositions qui font l'objet des exemples qui suivent.

### EXEMPLE 1

Cet exemple concerne la préparation d'une composition à base d'oxydes de zirconium, de silicium et de tungstène dans les proportions respectives en masse d'oxyde de 80%, 10% et 10%.

Une solution A est préparée en mélangeant dans un bécher sous agitation 50 g d'une solution d'ammoniaque (32 %vol) avec de l'eau distillée de sorte à obtenir un volume total de 500 mL. En parallèle, on prépare une solution B en mélangeant dans un bécher sous agitation 170,4 g d'une solution de nitrate de zirconium (26 % en poids exprimé en oxyde) avec de l'eau distillée de sorte à obtenir un volume total de 450 mL.

Dans un réacteur agité, on introduit la solution A puis on ajoute progressivement sous agitation la solution B. Le pH du milieu atteint une valeur d'au moins 9.

On prépare dans un bécher sous agitation une solution C en mélangeant 28 g de silicate de sodium (19 % en poids exprimé en oxyde) avec de l'eau distillée de sorte à obtenir un volume total de 50 mL. La solution C est introduite progressivement dans le réacteur agité.

La suspension ainsi obtenue est placée dans un réacteur en acier inoxydable équipé d'un mobile d'agitation. La température du milieu est portée à 95°C pendant 2 heures sous agitation.

Après retour à température ambiante, le précipité obtenu est filtré et lavé à l'eau distillée. Le solide est remis en suspension dans 900 mL d'eau distillée et le pH est ajustée à 9 avec une solution d'ammoniaque. 6 g de métatungstate d'ammonium est mis en solution dans 100 mL d'eau distillée puis cette solution est progressivement ajoutée à la suspension. Le milieu est finalement atomisé sur atomiseur Büchi à 110°C (température de sortie des gaz).

Le produit obtenu après atomisation est finalement calciné sous air à 900°C pendant 4 heures en palier. Ce produit est caractérisé par une surface spécifique de 77 m²/g et une phase tétragonale pure. Après calcination sous air à 1000°C pendant 4 heures en palier, la surface spécifique est égale à 23 m²/g.

Le produit ne contient pas de chlorures et de sulfates en quantités détectables et la teneur en sodium est inférieure à 100 ppm.

### EXEMPLE 2

Cet exemple concerne la préparation d'une composition à base d'oxydes de zirconium, de silicium et de titane dans les proportions respectives en masse d'oxyde de 80%, 10% et 10%. On prépare et on fait réagir les mêmes solutions que dans l'exemple 1 mais dans les quantités suivantes : 49 g de solution A, 170,2 g de solution B et 29,3 g de solution C.

La suspension ainsi obtenue est placée dans un réacteur en acier inoxydable équipé d'un mobile d'agitation. La température du milieu est portée à 95°C pendant 2 heures sous agitation.

Après retour à température ambiante, le précipité obtenu est filtré et lavé à l'eau distillée. Le solide est remis en suspension dans 900 mL d'eau distillée et le pH est ajustée à 8,5 avec une solution d'ammoniaque. 21,4 g d'oxalate de titanyle (25,7 % en poids en oxyde de titane) est mis en solution dans 100 mL d'eau distillée puis cette solution est progressivement ajoutée à la suspension. Le milieu est finalement atomisé sur atomiseur Büchi à 110°C.

Le produit obtenu après atomisation est finalement calciné sous air à 900°C pendant 4 heures en palier. Ce produit est caractérisé par une surface spécifique de 109 m²/g et une phase tétragonale pure. Après calcination sous air à 1000°C pendant 4 heures en palier, la surface spécifique est égale à 38 m²/g et le produit se présente toujours sous la forme d'une phase tétragonale pure.

Le produit ne contient pas de chlorures et de sulfates en quantités détectables et la teneur en sodium est inférieure à 100 ppm.

### EXEMPLE 3

Cet exemple concerne la préparation d'une composition à base d'oxydes de zirconium, de silicium et d'aluminium dans les proportions respectives en masse d'oxyde de 80%, 10% et 10%.

Une solution A est préparée en mélangeant dans un bécher sous agitation 73,5 g d'une solution d'ammoniaque (11,7N) avec de l'eau distillée de sorte à obtenir un volume total de 500 mL. En parallèle, on prépare une solution B en mélangeant dans un bécher sous agitation 153,1 g d'une solution de nitrate de zirconium (26 % en poids exprimé en oxyde) et 38,7g de nitrate d'aluminum avec de l'eau distillée de sorte à obtenir un volume total de 450 mL.

Dans un réacteur agité, on introduit la solution A puis on ajoute progressivement sous agitation la solution B. Le pH du milieu atteint une valeur d'au moins 9.

On prépare dans un bécher sous agitation une solution C en mélangeant 25,5 g de silicate de sodium (19 % en poids exprimé en oxyde) avec de l'eau distillée de sorte à obtenir un volume total de 50 mL. La solution C est introduite progressivement dans le réacteur agité.

La suspension ainsi obtenue est placée dans un réacteur en acier inoxydable équipé d'un mobile d'agitation. La température du milieu est portée à 98°C pendant 2 heures sous agitation.

Après retour à température ambiante, le précipité obtenu est filtré et lavé à l'eau distillée. Le solide est séché à 120°C à l'étuve une nuit puis calciné à 900°C pendant 4 heures en palier. Ce produit est caractérisé par une surface spécifique de 118 m²/g et une phase tétragonale pure. Après calcination sous air à 1000°C pendant 4 heures en palier, la surface spécifique est égale à 25 m²/g et le produit se présente toujours sous la forme d'une phase tétragonale pure.

Le produit ne contient pas de chlorures et de sulfates en quantités détectables et la teneur en sodium est inférieure à 100 ppm.

### EXEMPLE 4

Cet exemple concerne la préparation d'une composition à base d'oxydes de zirconium, de silicium et de cérium dans les proportions respectives en masse d'oxyde de 85%, 10% et 5%.

Une solution A est préparée en mélangeant dans un bécher sous agitation 39 g d'une solution d'ammoniaque (28 %vol) avec de l'eau distillée de sorte à obtenir un volume total de 500 mL. En parallèle, on prépare une solution B en mélangeant dans un bécher sous agitation 162,7 g d'une solution de nitrate de zirconium (26 % en poids exprimé en oxyde) avec de l'eau distillée de sorte à obtenir un volume total de 450 mL.

Dans un réacteur agité, on introduit la solution A puis on ajoute progressivement sous agitation la solution B. Le pH du milieu atteint une valeur d'au moins 9.

On prépare dans un bécher sous agitation une solution C en mélangeant 25,5 g de silicate de sodium (19 % en poids exprimé en oxyde) avec de l'eau distillée de sorte à obtenir un volume total de 50 mL. La solution C est introduite progressivement dans le réacteur agité.

La suspension ainsi obtenue est placée dans un réacteur en acier inoxydable équipé d'un mobile d'agitation. La température du milieu est portée à 99°C pendant 2 heures sous agitation.

Après retour à température ambiante, le précipité obtenu est filtré et lavé à l'eau distillée. Le solide est remis en suspension dans 900 mL d'eau distillée et le pH est ajustée à 9 avec une solution d'ammoniaque. 7,8 g de nitrate de cérium(lll) (27 % en poids exprimée en oxyde) est ajouté à 18 g d'eau distillée puis cette solution est progressivement ajoutée à la suspension. Le milieu est finalement atomisé sur atomiseur Büchi à 110°C.

Le produit obtenu après atomisation est finalement calciné sous air à 900°C pendant 4 heures en palier. Ce produit est caractérisé par une surface spécifique de 107 m²/g et une phase tétragonale pure. Après calcination sous air à 1000°C pendant 4 heures en palier, la surface spécifique est égale à 44 m²/g.

Le produit ne contient pas de chlorures et de sulfates en quantités détectables et la teneur en sodium est inférieure à 100 ppm.

### EXEMPLE 5

Cet exemple concerne la préparation d'une composition à base d'oxydes de zirconium, de silicium et de tungstène dans les proportions respectives en masse d'oxyde de 80%, 10% et 10%.

Une solution A est préparée en dissolvant 43,2 g d'hydroxyde de sodium sous forme de pastilles dans de l'eau distillée de sorte à obtenir un volume total de 500 mL. En parallèle, on prépare une solution B en mélangeant dans un bécher sous agitation 140,5 g de chlorure de zirconyl (100 g/L exprimé en oxyde de zirconium) avec de l'eau distillée de sorte à obtenir un volume total de 500 mL.

Dans un réacteur agité, on introduit la solution A puis on ajoute progressivement sous agitation la solution B. Le pH du milieu atteint une valeur d'au moins 12. Le précipité obtenu est filtré et lavé à 60°C avec 2,25 L d'eau distillée. Le solide est remis en suspension dans 1 L d'eau distillée.

On introduit dans cette suspension sous agitation 32,7 g de silicate de sodium (19 % en poids exprimé en oxyde) et 8,8 g de métatungstate de sodium dihydrate. Le pH est ajusté à 4 par addition d'une solution d'acide nitrique (68 %vol). Le milieu est porté à 60°C pendant 30 min puis le précipité est à nouveau filtré et lavé à 60°C avec 2,25 L d'eau distillée.

Le solide est remis en suspension dans 400 mL d'eau distillée avant d'être atomisé sur atomiseur Büchi à 105°C. Le produit obtenu est calciné sous air à 900°C pendant 4 heures en palier. Ce produit est caractérisé par une surface spécifique de 68 m²/g et une phase tétragonale pure. Après calcination sous air à 1000°C pendant 4 heures en palier, la surface spécifique est égale à 15 m²/g.

Le produit ne contient pas de chlorures et de sulfates en quantités détectables et la teneur en sodium est inférieure à 100 ppm.

### EXEMPLE 6

Cet exemple concerne la préparation d'une composition à base d'oxydes de zirconium, de silicium, de tungstène et d'yttrium dans les proportions respectives en masse d'oxyde de 71%, 10%, 10% et 9%.

On prépare une solution A en mélangeant dans un bécher sous agitation 222 g de chlorure de zirconyl (20%pds ZrO2), 18 g d'acide sulfurique (97% pds) et 24 g de nitrate d'yttrium (391 g/L Y2O3) avec de 93 g d'eau distillée.

Dans un réacteur agité, on introduit 705 g de solution d'hydroxyde de sodium (10%pds NaOH) puis on ajoute progressivement sous agitation la solution A. Le pH du milieu atteint une valeur d'au moins 12,5 en ajoutant ensuite une solution d'hydroxyde de sodium. Le précipité obtenu est filtré et lavé à 60°C avec 3 L d'eau distillée. Le solide est remis en suspension dans 1 L d'eau distillée.

On introduit dans cette suspension sous agitation 33 g de silicate de sodium (232 g/L SiO2), 8,9 g de métatungstate de sodium dihydrate et 20 g d'eau distillée. Le pH est ajusté à 5,5 par addition d'une solution d'acide nitrique (68 %vol). Le milieu est porté à 60°C pendant 30 min puis le précipité est à nouveau filtré et lavé à 60°C avec 3 L d'eau distillée.

Le solide est séché une nuit en étuve à 120°C puis le produit obtenu est calciné sous air à 900°C pendant 4 heures en palier. Ce produit est caractérisé par une surface spécifique de 96 m²/g et une phase tétragonale pure. Après calcination sous air à 1000°C pendant 4 heures en palier, la surface spécifique est égale à 25 m²/g.

Le produit contient 50 ppm de sodium, moins de 10 ppm de chlorures et moins de 120 ppm de sulfates.

### EXEMPLE 7 COMPARATIF

Une alumine de transition gamma commercialisée par Condéa est imprégnée par une solution de nitrate de lanthane de sorte à obtenir après séchage et calcination sous air à 500°C une alumine stabilisée par 10 % en poids d'oxyde de lanthane. La surface spécifique est égale à 120 m²/g.

On donne dans le tableau 2 qui suit les valeurs d'acidité des compositions qui font l'objet des exemples 1 à 6.

**Tableau 2**

| Composition | aciditée (%) | Activité acide (mmol/h/m²) |
|---|---|---|
| Ex 1 | 97 | 0,084 |
| Ex 2 | 99 | 0,075 |
| Ex 3 | 99 | 0,085 |
| Ex 4 | 99 | 0,077 |
| Ex 5 | 96 | 0,093 |
| Ex 6 | 97 | 0,106 |
| Ex 7 comparatif | 25 | 0,004 |

### EXEMPLE 8

Cet exemple décrit un test catalytique d'oxydation du monoxyde de carbone CO et des hydrocarbures HC utilisant les compositions préparées dans les exemples précédents.

### Préparation des compositions catalytique

Les compositions préparées dans les exemples précédents sont imprégnées par un sel d'hydroxyde de platine (II) tétramine (Pt(NH₃)₄(OH)₂) de manière à obtenir une composition catalytique contenant 1% en poids de platine par rapport à la masse d'oxydes.

Les compositions catalytiques obtenues sont séchées à 120°C pendant une nuit puis calcinées à 500°C sous air pendant 2h. Elles sont ensuite soumises à un vieillissement avant le test catalytique.

### Vieillissement

Dans un premier temps, on fait circuler en continu sur 400 mg de composition catalytique un mélange gazeux synthétique contenant 10%vol de O₂ et 10%vol de H₂O dans N₂ dans un réacteur en quartz contenant le composé catalytique. La température du réacteur est portée à 750°C pendant 16 heures en palier. La température revient ensuite à l'ambiante.

Dans un second temps, on fait circuler en continu un mélange gazeux synthétique contenant 20 vpm de SO₂, 10%vol de O₂ et 10%vol de H₂O dans N₂ dans un réacteur en quartz contenant le composé catalytique. La température du réacteur est portée à 300°C pendant 12 heures en palier.

La teneur en élément soufre S de la composition catalytique est mesurée à l'issue du vieillissement pour évaluer sa résistance à la sulfatation. Dans les conditions du vieillissement, la teneur maximale en soufre qui peut être captée par la composition catalytique est de 1,28 % en poids. Plus la teneur en soufre de la composition catalytique après le vieillissement est faible, plus sa résistance à la sulfatation est élevée.

Les compositions catalytiques vieillies sont ensuite évaluées en test catalytique d'amorçage en température (de type light-off) pour les réactions d'oxydation du CO, du propane C₃H₈ et du propène C₃H₆.

### Test catalytique

Dans ce test, on fait passer sur la composition catalytique un mélange synthétique représentatif d'un gaz d'échappement de moteur Diesel contenant 2000 vpm de CO, 667 vpm de H₂, 250 vpm de C₃H₆, 250 vpm de C₃H₈, 150 vpm de NO, 10%vol de CO₂, 13%vol de O₂ et 10%vol de H₂O dans N₂. Le mélange gazeux circule en continu avec un débit de 30 L/h dans un réacteur en quartz contenant 20 mg de composé catalytique dilué dans 180 mg de carbure de silicium SiC.

Le SiC est inerte vis-à-vis des réactions d'oxydation et joue ici le rôle de diluant permettant d'assurer l'homogénéité du lit catalytique.

Lors d'un test de type « light-off », on mesure la conversion du CO, du propane C₃H₈ et du propène C₃H₆ en fonction de la température de la composition catalytique. On soumet donc la composition catalytique à une rampe de température de 10°C/min entre 100°C et 450°C alors que le mélange synthétique circule dans le réacteur. Les gaz en sortie du réacteur sont analysés par spectroscopie infrarouge par intervalle d'environ 10s afin de mesurer la conversion du CO et des hydrocarbures en CO₂ et H₂O.

Les résultats sont exprimés en T10% et T50%, température à laquelle on mesure respectivement 10% et 50% de conversion du CO ou du propène C₃H₆.

2 rampes de températures sont enchaînées. L'activité catalytique de la composition catalytique est stabilisée lors de la première rampe. Les températures T10% et T 50% sont mesurées lors de la seconde rampe.

On donne ci-dessous les résultats obtenus après vieillissement.

**Tableau 3**

| (Stabilité des surfaces au vieillissement) | | | |
|---|---|---|---|
| Composition | SBET catalyseur avant vieillissement (m²/g) | SBET catalyseur après vieillissement (m²/g) | Variation de la surface BET Avant/après vieillissement (%) |
| Ex 1 | 77 | 73 | 5 |
| Ex 2 | 109 | 101 | 7 |
| Ex 3 | 118 | 111 | 6 |
| Ex 4 | 107 | 98 | 8 |
| Ex 5 | 68 | 65 | 4 |
| Ex 6 | 90 | 85 | 5 |
| Ex 7 comparatif | 120 | 80 | 33 |

**Tableau 4**

| (résistance à la sulfatation) | |
|---|---|
| Composition | Teneur en S (% en poids) |
| Ex 1 | 0,28 |
| Ex 2 | 0,32 |
| Ex 3 | 0,60 |
| Ex 4 | 0,44 |
| Ex 5 | 0,26 |
| Ex 6 | 0,56 |
| Ex 7 comparatif | 0,97 |

**Tableau 5**

| (T10/T50 après sulfatation) | | |
|---|---|---|
| Composition | T10%/T50% CO (°C) | T10%/T50% C₃H₆ (°C) |
| Ex 1 | 205 / 225 | 220 / 230 |
| Ex 2 | 215 / 245 | 230 / 250 |
| Ex 3 | 220 / 240 | 230 / 245 |
| Ex 4 | 220 / 240 | 235 / 250 |
| Ex 5 | 220 / 235 | 230 / 240 |
| Ex 6 | 210 / 230 | 220 / 235 |
| Ex 7 comparatif | 220 / 245 | 235 / 255 |

**Tableau 6**

| (T50% CO avant et après sulfatation) | | | |
|---|---|---|---|
| Composition | T50% CO (°C) Avant sulfatation | T50% CO (°C) après sulfatation | Variation du T50% avant/après (°C) |
| Ex 1 | 225 | 225 | 0 |
| Ex 2 | 240 | 245 | +5 |
| Ex 3 | 230 | 240 | +10 |
| Ex 4 | 240 | 240 | 0 |
| Ex 5 | 235 | 235 | 0 |
| Ex 6 | 225 | 230 | +5 |
| Ex 7 comparatif | 220 | 245 | +30 |

Les résultats montrent que pour les compositions selon l'invention, après vieillissement, la résistance à la sulfatation est améliorée et que les réactions d'oxydation du CO et du C₃H₆ s'amorcent à des températures inférieures ou égales à celles de l'alumine.

Il faut noter qu'il est très intéressant d'un point de vue industriel de disposer de produits dont les performances restent stables avant et après sulfatation. En effet, les produits de l'art antérieur, à forte variation de leur performance, nécessitent, lors de la conception des catalyseurs, de prévoir une quantité de composants de ces catalyseurs supérieures à celle théoriquement nécessaire pour compenser cette perte de performance. Ce n'est plus le cas pour les compositions de l'invention.

Le tableau qui suit donne les résultats pour la réaction d'oxydation du propane.

**Tableau 7**

| | |
|---|---|
| (T10% C₃H₈ après sulfatation) | |

| Composition | T10% C₃H₈ (°C) après sulfatation |
|---|---|
| Ex 1 | 305 |
| Ex 2 | 360 |
| Ex 4 | 350 |
| Ex 5 | 310 |
| Ex 6 | 330 |
| Ex 7 comparatif | 370 |

On constate pour des catalyseurs à base des compositions de l'invention que la conversion du propane est initiée à plus basse température que pour le catalyseur comparatif. Obtenir des conversions du propane dès 300°C est de nature à fortement améliorer le niveau de conversion globale des hydrocarbures dans le milieu traité.

### EXEMPLE 9

Cet exemple concerne la préparation d'une composition à base d'oxydes de zirconium, de silicium, de tungstène, d'yttrium et de cerium dans les proportions respectives en masse d'oxyde de 66,5%, 9,5%, 9,5%, 9,5% et 5%.

On prépare une solution A en mélangeant dans un bécher sous agitation 205 g de chlorure de zirconyl (20%pds ZrO₂), 17 g d'acide sulfurique (97% pds), 25 g de nitrate d'yttrium (391 g/L Y₂O₃) et 11 g de nitrate de cérium(III) (496 g/L CeO₂) avec de 99 g d'eau distillée.

Dans un réacteur agité, on introduit 700 g de solution d'hydroxyde de sodium (10%pds NaOH) puis on ajoute progressivement sous agitation la solution A. Le pH du milieu atteint une valeur d'au moins 12,5 en ajoutant ensuite une solution d'hydroxyde de sodium. 4 g d'eau oxygénée (30%vol) sont introduits dans le milieu. Après 30 min sous agitation, le précipité obtenu est filtré et lavé à 60°C avec 3 L d'eau distillée. Le solide est remis en suspension dans 1 L d'eau distillée.

On introduit dans cette suspension sous agitation 31 g de silicate de sodium (232 g/L SiO₂), 8,3 g de métatungstate de sodium dihydrate et 19 g d'eau distillée. Le pH est ajusté à 5,5 par addition d'une solution d'acide nitrique (68 %vol). Le milieu est porté à 60°C pendant 30 min puis le précipité est à nouveau filtré et lavé à 60°C avec 3 L d'eau distillée.

Le solide est séché une nuit en étuve à 120°C puis le produit obtenu est calciné sous air à 900°C pendant 4 heures en palier. Ce produit est caractérisé par une surface spécifique de 75 m²/g et une phase tétragonale pure.

Le produit contient 50 ppm de sodium, moins de 10 ppm de chlorures et moins de 120 ppm de sulfates.

### EXEMPLE 10

Cet exemple concerne la préparation d'une composition à base d'oxydes de zirconium, de silicium, de tungstène, d'yttrium et de cerium dans les proportions respectives en masse d'oxyde de 66,5%, 9,5%, 9,5%, 9,5% et 5%.

On prépare une solution A en mélangeant dans un bécher sous agitation 219 g de chlorure de zirconyl (20%pds ZrO₂), 18 g d'acide sulfurique (97% pds) et 27 g de nitrate d'yttrium (391 g/L Y₂O₃) avec de 93 g d'eau distillée.

Dans un réacteur agité, on introduit 705 g de solution d'hydroxyde de sodium (10%pds NaOH) puis on ajoute progressivement sous agitation la solution A. Le pH du milieu atteint une valeur d'au moins 12,5 en ajoutant ensuite une solution d'hydroxyde de sodium. Le précipité obtenu est filtré et lavé à 60°C avec 3 L d'eau distillée. Le solide est remis en suspension dans 1 L d'eau distillée.

On introduit dans cette suspension sous agitation 33 g de silicate de sodium (232 g/L SiO₂), 8,9 g de métatungstate de sodium dihydrate et 20 g d'eau distillée. Le pH est ajusté à 5,5 par addition d'une solution d'acide nitrique (68 %vol). Le milieu est porté à 60°C pendant 30 min puis le précipité est à nouveau filtré et lavé à 60°C avec 3 L d'eau distillée.

Le solide est remis en suspension dans 900 mL d'eau distillée et 11 g de nitrate de cérium(lll) (496 g/L CeO₂) sont ajoutés. Le milieu est finalement atomisé sur atomiseur Büchi à 110°C.

Le solide séché est calciné sous air à 900°C pendant 4 heures en palier. Ce produit est caractérisé par une surface spécifique de 81 m²/g et une phase tétragonale pure.

Le produit contient 50 ppm de sodium, moins de 10 ppm de chlorures et moins de 120 ppm de sulfates.

### EXEMPLE 11

Cet exemple concerne la préparation d'une composition à base d'oxydes de zirconium, de silicium, de tungstène, d'yttrium et de manganèse dans les proportions respectives en masse d'oxyde de 66,5%, 9,5%, 9,5%, 9,5% et 5%.

On procède comme dans l'exemple 10 sauf que 6,3 g de nitrate de manganèse(II) sont introduits avant l'atomisation. Le solide séché est calciné sous air à 700°C pendant 4 heures en palier. Ce produit est caractérisé par une surface spécifique de 90 m²/g et une phase tétragonale pure.

Le produit contient 50 ppm de sodium, moins de 10 ppm de chlorures et moins de 120 ppm de sulfates.

On donne dans le tableau 8 qui suit les valeurs d'acidité des compositions qui font l'objet des exemples 9 à 11.

**Tableau 8**

| Composition | Sélectivité acide (%) | Activité acide (mmol/h/m²) |
|---|---|---|
| Ex 9 | 95 | 0,063 |
| Ex 10 | 98 | 0,121 |
| Ex 11 | 90 | 0,051 |

### EXEMPLE 12 COMPARATIF

Une zeolithe ZSM5 de rapport molaire SiO₂/Al₂O₃ de 30 est échangée avec une solution d'acetylacetonate de fer pour obtenir une zéolithe Fe-ZSM5 contenant 3%pds de fer. Le produit est séchée une nuit à l'étuve à 120°C et calciné sous air à 500°C. La surface spécifique est supérieure à 300 m²/g.

### EXEMPLE 13

Cet exemple décrit un test catalytique de réduction des oxydes d'azote NOx par l'ammoniaque NH₃ (NH₃-SCR) utilisant les compositions préparées dans les exemples précédents.

### Vieillissement

On fait circuler en continu sur 400 mg de composition catalytique un mélange gazeux synthétique contenant 10%vol de O₂ et 10%vol de H₂O dans

N₂ dans un réacteur en quartz contenant le composé catalytique. La température du réacteur est portée soit à 750°C pendant 16 heures en palier soit à 900°C pendant 2 heures en palier. La température revient ensuite à l'ambiante.

Les compositions catalytiques à l'état frais ou vieillies sont ensuite évaluées en test catalytique de conversion des NOx par réduction catalytique sélective par NH₃ (SCR).

### Test catalytique

Dans ce test, on fait passer sur la composition catalytique un mélange synthétique représentatif de l'application SCR pour les véhicules Diesel 500 vpm de NH₃, 500 vpm de NO, 7%vol de O₂ et 2%vol de H₂O dans He. Le mélange gazeux circule en continu avec un débit de 60 mL/min dans un réacteur en quartz contenant 20 mg de composé catalytique dilué dans 180 mg de carbure de silicium SiC.

Le SiC est inerte vis-à-vis des réactions d'oxydation et joue ici le rôle de diluant permettant d'assurer l'homogénéité du lit catalytique.

Lors d'un test de type « light-off », on suit la conversion des NOx et la formation de N₂O en fonction de la température de la composition catalytique. On soumet donc la composition catalytique à une température de 300°C alors que le mélange synthétique circule dans le réacteur. Les gaz en sortie du réacteur sont analysés par spectroscopie de masse afin de suivre les concentrations des différents constituants du mélange gazeux.

Les résultats sont exprimés en niveau de conversion du NO à 300°C et concentration maximale de N₂O formé au cours du test.

On donne ci-dessous les résultats obtenus après vieillissement.

**Tableau 9**

| (réduction des NO par NH₃) vieilli 750°C/16h | | |
|---|---|---|
| Composition | Conversion NOx (%) à 300°C | Concentration max N₂O (vpm) |
| Ex 9 | 35 | 5 |
| Ex 10 | 50 | 5 |
| Ex 12 comparatif | 25 | 12 |

**Tableau 10**

| (réduction du NO par NH₃) NO₂/NO=0, vieilli 900°C/2h | | |
|---|---|---|
| Composition | Conversion NO (%) à 300°C | Concentration max N₂O (vpm) |
| Ex 10 | 30 | <5 |
| Ex 12 comparatif | 10 | 10 |

Les tableaux 9 et 10 montrent que les compositions selon l'invention permettent d'obtenir des conversions du NO élevée à 300°C dans la gamme de température de l'application Diesel tout en formant très peu de N₂O, même après des vieillissements sévères.

### EXEMPLE 14

Cet exemple concerne la préparation d'une composition à base d'oxydes de zirconium, de silicium, de tungstène, d'yttrium et d'étain dans les proportions respectives en masse d'oxyde de 63%, 9%, 9%, 9% et 10%.

On prépare une solution A en mélangeant dans un bécher sous agitation 192 g de chlorure de zirconyl (20%pds ZrO₂), 16 g d'acide sulfurique (97% pds), 23,5 g de nitrate d'yttrium (391 g/L Y₂O₃) et 11,5 g de chlorure stannique pentahydrate avec de 100 g d'eau distillée.

Dans un réacteur agité, on introduit 681 g de solution d'hydroxyde de sodium (10%pds NaOH) et 34 g d'eau distillée puis on ajoute progressivement sous agitation la solution A. Le pH du milieu atteint une valeur d'au moins 12,5 en ajoutant ensuite une solution d'hydroxyde de sodium. Après 30 min sous agitation, le précipité obtenu est filtré et lavé à 60°C avec 3 L d'eau distillée. Le solide est remis en suspension dans 690 L d'eau distillée.

On introduit dans cette suspension sous agitation 29 g de silicate de sodium (232 g/L SiO₂), 7,8 g de métatungstate de sodium dihydrate et 18 g d'eau distillée. Le pH est ajusté à 5,5 par addition d'une solution d'acide nitrique (68 %vol). Le milieu est porté à 60°C pendant 30 min puis le précipité est à nouveau filtré et lavé à 60°C avec 3 L d'eau distillée.

Le solide séché est calciné sous air à 900°C pendant 4 heures en palier. Ce produit est caractérisé par une surface spécifique de 106 m²/g et une phase tétragonale pure.

Le produit contient moins de 100 ppm de sodium, moins de 50 ppm de chlorures et moins de 120 ppm de sulfates.

### EXEMPLE 15

Cet exemple concerne la préparation d'une composition à base d'oxydes de zirconium, de silicium, de tungstène, d'yttrium et de zinc dans les proportions respectives en masse d'oxyde de 69%, 10%, 10%, 10% et 1%.

On prépare une solution A en mélangeant dans un bécher sous agitation 212 g de chlorure de zirconyl (20%pds ZrO₂), 18 g d'acide sulfurique (97% pds) et 27 g de nitrate d'yttrium (391 g/L Y₂O₃) avec de 93 g d'eau distillée.

Dans un réacteur agité, on introduit 706 g de solution d'hydroxyde de sodium (10%pds NaOH) puis on ajoute progressivement sous agitation la solution A. Le pH du milieu atteint une valeur d'au moins 12,5 en ajoutant ensuite une solution d'hydroxyde de sodium. Le précipité obtenu est filtré et lavé à 60°C avec 3 L d'eau distillée. Le solide est remis en suspension dans 710 g d'eau distillée.

On introduit dans cette suspension sous agitation 33 g de silicate de sodium (232 g/L SiO₂), 8,9 g de métatungstate de sodium dihydrate et 20 g d'eau distillée. Le pH est ajusté à 5,5 par addition d'une solution d'acide nitrique (68 %vol). Le milieu est porté à 60°C pendant 30 min puis le précipité est à nouveau filtré et lavé à 60°C avec 3 L d'eau distillée.

Le solide est remis en suspension dans 900 mL d'eau distillée et 2,5 g de nitrate de zinc (230 g/L ZnO) sont ajoutés. Le milieu est finalement atomisé sur atomiseur Büchi à 110°C.

Le solide séché est calciné sous air à 900°C pendant 4 heures en palier. Ce produit est caractérisé par une surface spécifique de 100 m²/g et une phase tétragonale pure.

Le produit contient moins de 100 ppm de sodium, moins de 50 ppm de chlorures et moins de 120 ppm de sulfates.

### EXEMPLE 16

Cet exemple concerne la préparation d'une composition à base d'oxydes de zirconium, de silicium, de tungstène, d'yttrium et de fer dans les proportions respectives en masse d'oxyde de 69%, 10%, 10%, 10% et 1%.

On procède comme dans l'exemple 10 sauf que 2 g d'une solution de nitrate de fer(II) (310 g/L Fe₂O₃sont introduits avant l'atomisation. Le solide séché est calciné sous air à 700°C pendant 4 heures en palier. Ce produit est caractérisé par une surface spécifique de 85 m²/g et une phase tétragonale pure.

Le produit contient 50 ppm de sodium, moins de 10 ppm de chlorures et moins de 120 ppm de sulfates.

On donne dans le tableau 11 qui suit les valeurs d'acidité des compositions qui font l'objet des exemples 14 à 16.

**Tableau 11**

| Composition | Sélectivité acide (%) | Activité acide (mmol/h/m²) |
|---|---|---|
| Ex 14 | 97 | 0,083 |
| Ex 15 | 91 | 0,096 |
| Ex 16 | 93 | 0,081 |

## Revendications

1. Composition à base d'oxyde de zirconium, d'oxyde de silicium et d'au moins un oxyde d'un autre élément M choisi parmi le titane, l'aluminium, le tungstène, le molybdène, le cérium, le fer, l'étain, le zinc et le manganèse et dans les proportions suivantes en masse en ces différents éléments :
- oxyde de silicium : 5%-30%
- oxyde de l'élément M : 1%-20%
le complément en oxyde de zirconium,
**caractérisée en ce qu'**elle présente en outre une acidité mesurée par le test au méthylbutynol d'au moins 90%.

2. Composition selon la revendication 1, **caractérisée en ce qu'**après calcination à 900°C 4 heures elle possède une surface spécifique d'au moins 65 m²/g quand l'élément M est le tungstène et d'au moins 95 m²/g quand l'élément M est différent du tungstène.

3. Composition selon l'une des revendications précédentes, **caractérisée en ce qu'**elle présente une acidité d'au moins 95%.

4. Composition selon l'une des revendications précédentes, **caractérisée en ce qu'**après calcination à 1000°C 4 heures elle possède une surface spécifique d'au moins 10 m²/g.

5. Composition selon l'une des revendications précédentes, **caractérisée en ce qu'**elle présente un activité acide d'au moins 0,03 mmol/h/m², plus particulièrement d'au moins 0,05 et encore plus particulièrement d'au moins 0,09.

6. Composition selon l'une des revendications précédentes, **caractérisée en ce qu'**elle présente une teneur en sulfate d'au plus 800 ppm, plus particulièrement d'au plus 500 ppm et encore plus particulièrement d'au plus 100 ppm.

7. Composition selon l'une des revendications précédentes, **caractérisée en ce qu'**elle comprend en outre au moins un oxyde d'un quatrième élément M' choisi parmi les terres rares autres que le cérium.

8. Procédé de préparation d'une composition selon l'une des revendications 1 à 6, **caractérisé en ce qu'**il comprend les étapes suivantes :
- (a₁) on met en présence dans un milieu liquide un composé du zirconium, un composé du silicium, un composé de l'élément M et un composé basique ce par quoi on obtient un précipité;
- (b₁) on effectue un mûrissement en milieu liquide du précipité ainsi obtenu;
- (c₁) on sépare le précipité du milieu issu de l'étape précédente et on le calcine.

9. Procédé de préparation d'une composition selon l'une des revendications 1 à 6, **caractérisé en ce qu'**il comprend les étapes suivantes :
- (a₁') on met en présence dans un milieu liquide un composé du zirconium, un composé basique et un composé du silicium ce par quoi on obtient un précipité;
- (b₁') on effectue un mûrissement en milieu liquide du précipité ainsi obtenu;
- (c₁') on ajoute au milieu issu de l'étape précédente un composé de l'élément M;
- (d₁') on sèche, plus particulièrement par atomisation, la suspension issue de l'étape précédente;
- (e₁') on calcine le produit issu de l'étape précédente.

10. Procédé de préparation d'une composition selon l'une des revendications 1 à 6, **caractérisé en ce qu'**il comprend les étapes suivantes :
- (a₂) on met en présence dans un milieu liquide un oxychlorure de zirconium, un composé de l'élément M et un composé basique de manière à amener le pH du milieu formé à une valeur d'au moins 12, ce par quoi on obtient un précipité;
- (b₂) on effectue éventuellement un mûrissement du milieu obtenu à l'étape précédente;
- (c₂) on ajoute au milieu obtenu à l'étape (a₂) ou (b₂) un composé du silicium et un acide de manière à amener le pH du milieu formé à une valeur comprise entre 4 et 8;
- (d₂) on sépare le précipité du milieu issu de l'étape (c₂) et on le calcine.

11. Procédé de préparation d'une composition selon l'une des revendications 1 à 6, **caractérisé en ce qu'**il comprend les étapes suivantes :
- (a₂') on met en présence dans un milieu liquide un oxychlorure de zirconium, et un composé basique de manière à amener le pH du milieu formé à une valeur d'au moins 12, ce par quoi on obtient un précipité;
- (b₂') on effectue éventuellement un mûrissement du milieu obtenu à l'étape précédente;
- (c₂') on ajoute au milieu obtenu à l'étape (a₂^{'}) ou (b₂^{'}) un composé du silicium et un acide de manière à amener le pH du milieu formé à une valeur comprise entre 4 et 8;
- (d₂') on sépare le précipité du milieu issu de l'étape (c₂'), on le remet en suspension dans l'eau et on ajoute à la suspension obtenue un composé de l'élément M;
- (e₂') on sèche, plus particulièrement par atomisation, la suspension;
- (f₂') on calcine le produit issu de l'étape (e₂').

12. Procédé de préparation d'une composition selon l'une des revendications 1 à 6, **caractérisé en ce qu'**il comprend les étapes suivantes :
- (a₂") on met en présence dans un milieu liquide un oxychlorure de zirconium, et un composé basique de manière à amener le pH du milieu formé à une valeur d'au moins 12, ce par quoi on obtient un précipité;
- (b₂") on effectue éventuellement un mûrissement du milieu obtenu à l'étape précédente;
- (c₂") on ajoute au milieu obtenu à l'étape (a₂") ou (b₂") un composé du silicium et un composé de l'élément M et un acide de manière à amener le pH du milieu formé à une valeur comprise entre 4 et 8;
- (d₂") on sépare le solide du milieu issu de l'étape (c₂") et on le calcine.

13. Procédé de préparation d'une composition selon l'une des revendications 1 à 6 et contenant au moins deux éléments M, **caractérisé en ce qu'**il comprend les étapes suivantes :
- (a₃) on met en présence dans un milieu liquide un oxychlorure de zirconium, un composé d'au moins un des éléments M et un composé basique de manière à amener le pH du milieu formé à une valeur d'au moins 12, ce par quoi on obtient un précipité;
- (b₃) on effectue éventuellement un mûrissement du milieu obtenu à l'étape précédente;
- (c₃) on ajoute au milieu obtenu à l'étape (a₃) ou (b₃) un composé du silicium et un composé d'au moins un autre élément M et un acide de manière à amener le pH du milieu formé à une valeur comprise entre 4 et 8;
- (d₃) on sépare le solide du milieu issu de l'étape (c₃) et on le calcine.

14. Procédé de préparation d'une composition selon l'une des revendications 1 à 6 et contenant au moins deux éléments M, **caractérisé en ce qu'**il comprend les étapes suivantes :
- (a₄) on met en présence dans un milieu liquide un oxychlorure de zirconium, et un composé basique de manière à amener le pH du milieu formé à une valeur d'au moins 12, ce par quoi on obtient un précipité;
- (b₄) on effectue éventuellement un mûrissement du milieu obtenu à l'étape précédente;
- (c₄) on ajoute au milieu obtenu à l'étape (a₄) ou (b₄) un composé du silicium, un composé d'au moins un des éléments M et un acide de manière à amener le pH du milieu formé à une valeur comprise entre 4 et 8;
- (d₄) on sépare le précipité du milieu issu de l'étape (c₄), on le remet en suspension dans l'eau et on ajoute à la suspension obtenue un composé d'au moins un autre élément M;
- (e₄) on sèche, plus particulièrement par atomisation, la suspension;
- (f₄) on calcine le produit issu de l'étape (e₄).

15. Procédé selon l'une des revendications 8 à 14 pour la préparation d'une composition selon la revendication 7 et contenant au moins un élément M', **caractérisé en ce qu'**on réalise l'étape (a₁), (a₁'), (c₁'), (a₂), (c₂), (a₂'), (c₂'), (d₂'), (a₂"), (c₂"), (a₃), (c₃), (a₄) ou (c₄) en présence d'un composé de l'élément M'.

16. Procédé selon l'une des revendications 10 à 15, **caractérisé en ce qu'**à l'issue de l'étape (c₂), (c₂'), (c₂"), (c₃) ou (c₄) et avant la séparation du précipité, on effectue un mûrissement du précipité en milieu liquide.

17. Procédé selon l'une des revendications 8, 10, 12, 13, 15 ou 16, **caractérisé en ce qu'**avant la calcination, on sèche le précipité par atomisation.

18. Procédé selon l'une des revendications 8 à 17, **caractérisé en ce que** le composé de l'élément M est choisi parmi l'oxalate de titane ammonium, l'oxychlorure de titane, le chlorure d'étain, le nitrate d'aluminium, le chlorohydrate d'aluminium, la boehmite, le métatungstate d'ammonium et le métatungstate de sodium, l'heptamolybdate d'ammonium, les nitrates de cérium, de fer, de zinc ou de manganèse.

19. Système catalytique, **caractérisé en ce qu'**il comprend une composition selon l'une des revendications 1 à 7.

20. Procédé de traitement de gaz, plus particulièrement des gaz d'échappement d'un moteur diesel, **caractérisé en ce qu'**on utilise comme catalyseur d'oxydation du CO et des hydrocarbures contenus dans les gaz un système catalytique selon la revendication 19.

21. Procédé de traitement des gaz d'échappement d'un moteur diesel, **caractérisé en ce qu'**on utilise comme catalyseur de réduction des oxydes d'azote (NOx) dans la réaction de réduction de ces NOx par l'ammoniaque ou l'urée un système catalytique selon la revendication 19.

## Patentansprüche

1. Eine Zusammensetzung auf Basis von Zirkoniumoxid, Siliziumoxid und mindestens einem Oxid eines anderen Elements M, das ausgewählt ist aus Titan, Aluminium, Wolfram, Molybdän, Cer, Eisen, Zinn, Zink und Mangan, und in den folgenden Massenverhältnissen dieser unterschiedlichen Elemente:
- Siliziumoxid: 5-30 %
- Oxid des Elements M: 1-20 %
der Rest Zirkoniumoxid,
**dadurch gekennzeichnet, dass** sie des Weiteren einen Säuregehalt, gemessen durch den Test von Methylbutinol, von mindestens 90 % aufweist.

2. Zusammensetzung gemäß Anspruch 1, **dadurch gekennzeichnet, dass** sie nach 4-stündiger Kalzinierung bei 900 °C eine spezifische Oberfläche von mindestens 65 m²/g aufweist, wenn das Element M Wolfram ist, und von mindestens 95 m²/g, wenn das Element M nicht gleich Wolfram ist.

3. Zusammensetzung gemäß einem der vorhergehenden Ansprüche, **dadurch gekennzeichnet, dass** sie einen Säuregehalt von mindestens 95 % aufweist.

4. Zusammensetzung gemäß einem der vorhergehenden Ansprüche, **dadurch gekennzeichnet, dass** sie nach 4-stündiger Kalzinierung bei 1 000 °C eine spezifische Oberfläche von mindestens 10 m²/g aufweist.

5. Zusammensetzung gemäß einem der vorhergehenden Ansprüche, **dadurch gekennzeichnet, dass** sie eine Säureaktivität von mindestens 0,03 mmol/h/m², insbesondere von mindestens 0,05 und speziell von mindestens 0,09 aufweist.

6. Zusammensetzung gemäß einem der vorhergehenden Ansprüche, **dadurch gekennzeichnet, dass** sie einen Sulfatgehalt von höchstens 800 ppm, insbesondere von höchstens 500 ppm und speziell von höchstens 100 ppm aufweist.

7. Zusammensetzung gemäß einem der vorhergehenden Ansprüche, **dadurch gekennzeichnet, dass** sie des Weiteren mindestens ein Oxid eines vierten Elements M' beinhaltet, das aus Seltenerdmetallen mit Ausnahme von Cer ausgewählt ist.

8. Ein Verfahren zur Herstellung einer Zusammensetzung gemäß einem der Ansprüche 1 bis 6, **dadurch gekennzeichnet, dass** es die folgenden Schritte beinhaltet:
- (a₁) In-Kontakt-Bringen, in einem flüssigen Medium, einer Zirkoniumverbindung, einer Siliziumverbindung, einer Verbindung des Elements M und einer basischen Verbindung, wodurch ein Niederschlag erhalten wird;
- (b₁) Ausreifen des so erhaltenen Niederschlags in flüssigem Medium;
- (c₁) Trennen des Niederschlags von dem aus dem vorhergehenden Schritt hervorgehenden Medium und Kalzinieren dieses.

9. Verfahren zur Herstellung einer Zusammensetzung gemäß einem der Ansprüche 1 bis 6, **dadurch gekennzeichnet, dass** es die folgenden Schritte beinhaltet:
- (a₁') In-Kontakt-Bringen, in einem flüssigen Medium, einer Zirkoniumverbindung, einer basischen Verbindung und einer Siliziumverbindung, wodurch ein Niederschlag erhalten wird;
- (b₁') Ausreifen des so erhaltenen Niederschlags in flüssigem Medium;
- (c₁') Zugeben zu dem aus dem vorhergehenden Schritt hervorgehenden Medium einer Verbindung des Elements M;
- (d₁') Trocknen, insbesondere durch Zerstäubung, der aus dem vorhergehenden Schritt hervorgehenden Suspension;
- (e₁') Kalzinieren des aus dem vorhergehenden Schritt hervorgehenden Produkts.

10. Verfahren zur Herstellung einer Zusammensetzung gemäß einem der Ansprüche 1 bis 6, **dadurch gekennzeichnet, dass** es die folgenden Schritte beinhaltet:
- (a₂) In-Kontakt-Bringen, in einem flüssigen Medium, eines Zirkoniumoxychlorids, einer Verbindung des Elements M und einer basischen Verbindung, bis der pH-Wert des gebildeten Mediums M einen Wert von mindestens 12 erreicht hat, wodurch ein Niederschlag erhalten wird;
- (b₂) gegebenenfalls Ausreifen des in dem vorhergehenden Schritt erhaltenen Mediums;
- (c₂) Zugeben zu dem in dem Schritt (a₂) oder (b₂) erhaltenen Medium einer Siliziumverbindung und einer Säure, bis der pH-Wert des gebildeten Mediums einen Wert von zwischen 4 und 8 erreicht hat;
- (d₂) Trennen des Niederschlags von dem aus dem Schritt (c₂) hervorgehenden Medium und Kalzinieren dieses.

11. Verfahren zur Herstellung einer Zusammensetzung gemäß einem der Ansprüche 1 bis 6, **dadurch gekennzeichnet, dass** es die folgenden Schritte beinhaltet:
- (a₂') In-Kontakt-Bringen, in einem flüssigen Medium, eines Zirkoniumoxychlorids und einer basischen Verbindung, bis der pH-Wert des gebildeten Mediums einen Wert von mindestens 12 erreicht hat, wodurch ein Niederschlag erhalten wird;
- (b₂') gegebenenfalls Ausreifen des in dem vorhergehenden Schritt erhaltenen Mediums;
- (c₂') Zugeben zu dem in dem Schritt (a₂') oder (b₂') erhaltenen Medium einer Siliziumverbindung und einer Säure, bis der pH-Wert des gebildeten Mediums einen Wert von zwischen 4 und 8 erreicht hat;
- (d₂') Trennen des Niederschlags von dem aus dem Schritt (c₂') hervorgehenden Medium und erneutes Suspendieren dieses in Wasser und Zugeben zu der erhaltenen Suspension einer Verbindung des Elements M;
- (e₂') Trocknen, insbesondere durch Zerstäubung, der Suspension;
- (f₂') Kalzinieren des aus dem Schritt (e₂') hervorgehenden Produkts.

12. Verfahren zur Herstellung einer Zusammensetzung gemäß einem der Ansprüche 1 bis 6, **dadurch gekennzeichnet, dass** es die folgenden Schritte beinhaltet:
- (a₂") In-Kontakt-Bringen, in einem flüssigen Medium, eines Zirkoniumoxychlorids und einer basischen Verbindung, bis der pH-Wert des gebildeten Mediums einen Wert von mindestens 12 erreicht hat, wodurch ein Niederschlag erhalten wird;
- (b₂") gegebenenfalls Ausreifen des in dem vorhergehenden Schritt erhaltenen Mediums;
- (c₂") Zugeben zu dem in dem Schritt (a₂") oder (b₂") erhaltenen Medium einer Siliziumverbindung und einer Verbindung des Elements M und einer Säure, bis der pH-Wert des gebildeten Mediums einen Wert von zwischen 4 und 8 erreicht hat;
- (d₂") Trennen des Feststoffs von dem aus dem Schritt (c₂") hervorgehenden Medium und Kalzinieren dieses.

13. Verfahren zur Herstellung einer Zusammensetzung gemäß einem der Ansprüche 1 bis 6 und enthaltend mindestens zwei Elemente M, **dadurch gekennzeichnet, dass** es die folgenden Schritte beinhaltet:
- (a₃) In-Kontakt-Bringen, in einem flüssigen Medium, eines Zirkoniumoxychlorids, einer Verbindung von mindestens einem der Elemente M und einer basischen Verbindung, bis der pH-Wert des gebildeten Mediums einen Wert von mindestens 12 erreicht hat, wodurch ein Niederschlag erhalten wird;
- (b₃) gegebenenfalls Ausreifen des in dem vorhergehenden Schritt erhaltenen Mediums;
- (c₃) Zugeben zu dem in dem Schritt (a₃) oder (b₃) erhaltenen Medium einer Siliziumverbindung und einer Verbindung von mindestens einem weiteren Element M und einer Säure, bis der pH-Wert des gebildeten Mediums einen Wert von zwischen 4 und 8 erreicht hat;
- (d₃) Trennen des Feststoffs von dem aus dem Schritt (c₃) hervorgehenden Medium und Kalzinieren dieses.

14. Verfahren zur Herstellung einer Zusammensetzung gemäß einem der Ansprüche 1 bis 6 und enthaltend mindestens zwei Elemente M, **dadurch gekennzeichnet, dass** es die folgenden Schritte beinhaltet:
- (a₄) In-Kontakt-Bringen, in einem flüssigen Medium, eines Zirkoniumoxychlorids und einer basischen Verbindung, bis der pH-Wert des gebildeten Mediums einen Wert von mindestens 12 erreicht hat, wodurch ein Niederschlag erhalten wird;
- (b₄) gegebenenfalls Ausreifen des in dem vorhergehenden Schritt erhaltenen Mediums;
- (c₄) Zugeben zu dem in dem Schritt (a₄) oder (b₄) erhaltenen Medium einer Siliziumverbindung, einer Verbindung von mindestens einem der Elemente M und einer Säure, bis der pH-Wert des gebildeten Mediums einen Wert von zwischen 4 und 8 erreicht hat;
- (d₄) Trennen des Niederschlags von dem aus dem Schritt (c₄) hervorgehenden Medium und erneutes Suspendieren dieses in Wasser und Zugeben zu der erhaltenen Suspension einer Verbindung von mindestens einem weiteren Element M;
- (e₄) Trocknen, insbesondere durch Zerstäubung, der Suspension;
- (f₄) Kalzinieren des aus Schritt (e₄) hervorgehenden Produkts.

15. Verfahren gemäß einem der Ansprüche 8 bis 14 zur Herstellung einer Zusammensetzung nach Anspruch 7 und enthaltend mindestens ein Element M', **dadurch gekennzeichnet, dass** der Schritt (a₁), (a₁'), (c₁'), (a₂), (c₂), (a₂'), (c₂'), (d₂'), (a₂"), (c₂"), (a₃), (c₃), (a₄) oder (c₄) in Gegenwart einer Verbindung des Elements M' durchgeführt wird.

16. Verfahren gemäß einem der Ansprüche 10 bis 15, **dadurch gekennzeichnet, dass** nach dem Schritt (c₂), (c₂'), (c₂"), (c₃) oder (c₄) und vor dem Trennen des Niederschlags ein Ausreifen des Niederschlags in flüssigem Medium ausgeführt wird.

17. Verfahren gemäß einem der Ansprüche 8, 10, 12, 13, 15 oder 16, **dadurch gekennzeichnet, dass** der Niederschlag vor dem Kalzinieren durch Zerstäubung getrocknet wird.

18. Verfahren gemäß einem der Ansprüche 8 bis 17, **dadurch gekennzeichnet, dass** die Verbindung des Elements M aus Ammonium-Titanoxalat, Titanoxychlorid, Zinnchlorid, Aluminiumnitrat, Aluminiumchlorhydrat, Böhmit, Ammoniummetawolframat und Natriummetawolframat, Ammoniumheptamolybdat, Cer-, Eisen-, Zink- oder Mangannitrat ausgewählt ist.

19. Ein Katalysatorsystem, **dadurch gekennzeichnet, dass** es eine Zusammensetzung gemäß einem der Ansprüche 1 bis 7 beinhaltet.

20. Ein Verfahren zur Aufbereitung von Gas, insbesondere der Abgase eines Dieselmotors, **dadurch gekennzeichnet, dass** als Oxidationskatalysator des CO und der Kohlenwasserstoffe, die in den Gasen enthalten sind, ein Katalysatorsystem gemäß Anspruch 19 verwendet wird.

21. Ein Verfahren zur Aufbereitung der Abgase eines Dieselmotors, **dadurch gekennzeichnet, dass** als Katalysator zur Reduktion der Stickoxide (NOx) in der Reduktionsreaktion dieser NOx mit Ammoniak oder Harnstoff ein Katalysatorsystem gemäß Anspruch 19 verwendet wird.

## Claims

1. A composition based on zirconium oxide, silicon oxide and at least one oxide of another element M selected from titanium, aluminium, tungsten, molybdenum, cerium, iron, tin, zinc and manganese and in the following proportions by weight of these different elements:
- silicon oxide: 5%-30%
- oxide of element M: 1 %-20%
the remainder being zirconium oxide,
**characterised in that** it furthermore exhibits an acidity measured by the methylbutynol test of at least 90%.

2. The composition according to Claim 1, **characterised in that**, after calcination at 900°C for 4 hours, it possesses a specific surface area of at least 65 m²/g when the element M is tungsten and of at least 95 m²/g when the element M is different from tungsten.

3. The composition according to any one of the preceding claims, **characterised in that** it exhibits an acidity of at least 95%.

4. The composition according to any one of the preceding claims, **characterised in that**, after calcination at 1000°C for 4 hours, it possesses a specific surface area of at least 10 m²/g.

5. The composition according to any one of the preceding claims, **characterised in that** it exhibits an acid activity of at least 0.03 mmol/h/m², more particularly of at least 0.05 and even more particularly of at least 0.09.

6. The composition according to any one of the preceding claims, **characterised in that** it exhibits a sulphate content of at most 800 ppm, more particularly of at most 500 ppm and even more particularly of at most 100 ppm.

7. The composition according to any one of the preceding claims, **characterised in that** it further comprises at least one oxide of a fourth element M' selected from the rare earths other than cerium.

8. A method of preparing a composition according to any one of Claims 1 to 6, **characterised in that** it comprises the following steps:
- (a₁) a zirconium compound, a silicon compound, a compound of element M and a basic compound are brought together in a liquid medium, as a result of which a precipitate is obtained;
- (b₁) a ripening of the precipitate thus obtained is performed in liquid medium;
- (c₁) the precipitate is separated from the medium resulting from the preceding step and it is calcined.

9. A method of preparing a composition according to any one of Claims 1 to 6, **characterised in that** it comprises the following steps:
- (a₁') a zirconium compound, a basic compound and a silicon compound are brought together in a liquid medium, as a result of which a precipitate is obtained;
- (b₁') a ripening of the precipitate thus obtained is performed in liquid medium;
- (c₁') a compound of element M is added to the medium resulting from the preceding step;
- (d₁') the suspension resulting from the preceding step is dried, more particularly through atomisation;
- (e₁') the product resulting from the preceding step is calcined.

10. A method of preparing a composition according to any one of Claims 1 to 6, **characterised in that** it comprises the following steps:
- (a₂) a zirconium oxychloride, a compound of element M and a basic compound are brought together in a liquid medium in order to bring the pH of the medium formed to a value of at least 12, as a result of which a precipitate is obtained;
- (b₂) optionally, a ripening of the medium obtained in the preceding step is performed;
- (c₂) a silicon compound and an acid are added to the medium obtained in step (a₂) or (b₂) in order to bring the pH of the medium formed to a value of between 4 and 8;
- (d₂) the precipitate is separated from the medium resulting from step (c₂) and it is calcined.

11. A method of preparing a composition according to any one of Claims 1 to 6, **characterised in that** it comprises the following steps:
- (a₂') a zirconium oxychloride and a basic compound are brought together in a liquid medium in order to bring the pH of the medium formed to a value of at least 12, as a result of which a precipitate is obtained;
- (b₂') optionally, a ripening of the medium obtained in the preceding step is performed;
- (c₂') a silicon compound and an acid are added to the medium obtained in step (a₂') or (b₂') in order to bring the pH of the medium formed to a value of between 4 and 8;
- (d₂') the precipitate is separated from the medium resulting from step (c₂'), put back into suspension in water and a compound of element M is added to the suspension obtained;
- (e₂') the suspension is dried, more particularly through atomisation;
- (f₂') the product resulting from step (e₂') is calcined.

12. A method of preparing a composition according to any one of Claims 1 to 6, **characterised in that** it comprises the following steps:
- (a₂") a zirconium oxychloride and a basic compound are brought together in a liquid medium in order to bring the pH of the medium formed to a value of at least 12, as a result of which a precipitate is obtained;
- (b₂") optionally, a ripening of the medium obtained in the preceding step is performed;
- (c₂") a silicon compound and a compound of element M and an acid are added to the medium obtained in step (a₂") or (b₂") in order to bring the pH of the medium formed to a value of between 4 and 8;
- (d₂") the solid is separated from the medium resulting from step (c₂") and it is calcined.

13. A method of preparing a composition according to any one of Claims 1 to 6 and containing at least two elements M, **characterised in that** it comprises the following steps:
- (a₃) a zirconium oxychloride, a compound of at least one of the elements M and a basic compound are brought together in a liquid medium in order to bring the pH of the medium formed to a value of at least 12, as a result of which a precipitate is obtained;
- (b₃) optionally, a ripening of the medium obtained in the preceding step is performed;
- (c₃) a silicon compound and a compound of at least one other element M and an acid are added to the medium obtained in step (a₃) or (b₃) in order to bring the pH of the medium formed to a value of between 4 and 8;
- (d₃) the solid is separated from the medium resulting from step (c₃) and it is calcined.

14. The method of preparing a composition according to any one of Claims 1 to 6 and containing at least two elements M, **characterised in that** it comprises the following steps:
- (a₄) a zirconium oxychloride and a basic compound are brought together in a liquid medium in order to bring the pH of the medium formed to a value of at least 12, as a result of which a precipitate is obtained;
- (b₄) optionally, a ripening of the medium obtained in the preceding step is performed;
- (c₄) a silicon compound, a compound of at least one of the elements M and an acid are added to the medium obtained in step (a₄) or (b₄) in order to bring the pH of the medium formed to a value of between 4 and 8;
- (d₄) the precipitate is separated from the medium resulting from step (c₄), put back into suspension in water and a compound of at least one other element M is added to the suspension obtained;
- (e₄) the suspension is dried, more particularly through atomisation;
- (f₄) the product resulting from step (e₄) is calcined.

15. The method according to any one of Claims 8 to 14 for the preparation of a composition according to Claim 7 and containing at least one element M', **characterised in that** step (a₁), (a₁'), (c₁'), (a₂), (c₂), (a₂'), (c₂'), (d₂'), (a₂"), (c₂"), (a₃), (c₃), (a₄) or (c₄) is performed in the presence of a compound of element M'.

16. The method according to any one of Claims 10 to 15, **characterised in that** following step (c₂), (c₂'), (c₂'), (c₃) or (c₄) and before the separation of the precipitate a ripening of the precipitate is performed in liquid medium.

17. The method according to any one of Claims 8, 10, 12, 13, 15 or 16, **characterised in that**, before the calcination, the precipitate is dried through atomisation.

18. The method according to any one of Claims 8 to 17, **characterised in that** the compound of element M is selected from ammonium titanium oxalate, titanium oxychloride, tin chloride, aluminium nitrate, aluminium chlorohydrate, boehmite, ammonium metatungstate and sodium metatungstate, ammonium heptamolybdate, cerium nitrate, iron nitrate, zinc nitrate or manganese nitrate.

19. A catalytic system, **characterised in that** it comprises a composition according to any one of Claims 1 to 7.

20. A method of treating gas, more particularly the exhaust gases of a diesel engine, **characterised in that** a catalytic system according to Claim 19 is used as a catalyst for oxidising CO and hydrocarbons contained in the gases.

21. A method of processing the exhaust gases of a diesel engine, **characterised in that** a catalytic system according to Claim 19 is used as a catalyst for reducing nitrogen oxides (NOx) in the reaction for reducing these NOx through ammonia or urea.
